# EUROPEAN PATENT APPLICATION

(11) **EP 1 650 006 A2**
(43) Date of publication of application: **26.04.2006**
(21) Application number: 05256408.5
(22) Date of filing: 14.10.2005
(51) Int. Cl.: B29C 47/04, B29C 69/00

(54) **Method for manufacturing pipes with external axial grooves**

(30) Priority: 21.10.2004 GB 0423389
(71) Applicant: Glynwed Pipe Systems Limited, Kent, TN13 1SD (GB)
(72) Inventor: Wilson, Keith Andrew, Northamptonshire, NM10 9LW (GB); Hill, David John, Cambridgeshire, PE19 5UA (GB)
(74) Representative: Townsend, Victoria Jayne

(57) **Abstract**

A method for the manufacture of pipes with external grooves the method comprising;
a) extruding a plain cylindrical pipe (5) in a first plastic material;
b) co-extruding onto an outer surface of the pipe of step (a) one or more strips of an incompatible plastic material (3) being selected to be incompatible with the first plastic material such that it will not fuse with the first plastic material;
c) extruding adjacent the strips of step b), a plurality of strips of.the first plastic material or a material being selected to be compatible therewith (4) such that it will fuse with the plain cylindrical pipe of step a) ;
d) cooling the co-extrusion; and
e) removing the strips (3) of step b) to provide a pipe having one or more grooves on it's outer surface.

## Description

Pipes and pipe liners with external grooves are known. The present invention is directed to a novel method for the production of such pipes made from plastic materials. In particular, the method has application in the manufacture of such pipes from semi-flexible plastic materials.

It is known to extrude plastic pipes and the inventors have considered including in an extrusion die, axial ribs to provide corresponding external grooves in an extruded pipe. However, such a method suffers from inherent problems some of which are discussed below.

In conventional pipe extrusion an annular die is used to form the required pipe cylindrical shape, and a calibration process is used to fix the pipe dimensions and initiate cooling. Modern extrusion processes utilise a process known as vacuum calibration (previously pressure forming was carried out). In the vacuum calibration process the annular melt from the die passes directly into a smaller diameter perforated or slotted (brass) cylindrical sleeve (calibrator) mounted in a vacuum tank equipped with spray cooling. The diameter reduction aids the formation of a seal on the outside of the annular melt as it enters the calibrator. The vacuum around the perforated calibrator keeps the annular melt in contact with the bore of the calibrator sleeve. The water spray provides lubrication and cooling. Therefore the diameter of the extruded pipe is controlled by the bore of the calibrator, and cooling continues as the solidified pipe shape progresses from the inside of the calibrator further into the vacuum spray cooling tank. The vacuum continues to hold extruded pipe shape circular as cooling progresses. Further spray cooling tanks may be employed, but vacuum is generally not required once the initial formation and cooling step is completed.

If we provide axial ribs in the die ring to provide the corresponding grooves in the extruded annular shape. This is indeed easy to achieve, albeit for the effects of die swell, which may distort the immediate groove shape, a melt extruded in this manner does indeed have grooves. However retaining the required groove shape and depth in a solid cooled form is difficult with most plastics, eg polyolefins or polyamides, other than PVCU. This is because of a combination of factors:
a. Die swell - A visco-elastic phenomenon where melt exiting a die wishes to expand and dilate, thus producing a melt shape differing from the die exit. In the case of a simple annular die, the distortion is simply enlargement, which Is not a disadvantage in the case of circular pipe, and helps provide the seal previously described at the entrance to the calibrator. In a more complex shape there is considerable distortion.
b. Stretching - The melt is drawn down to the smaller diameter of the calibrator, partly to overcome die swell. Stretching further distorts the shape.
c. Sealing - At the calibrator entrance it is necessary to make a seal for the vacuum. A Grooved pipe makes for no such seal in a circular calibrator. If the calibrator be provided with simple ribs to match the grooves it has been found that leakage still occurs around the ribs, because of the progressive cooling and the extreme difficulty of accurately predicting the required rib dimensions. Also, it is not possible to apply sufficient vacuum or internal pressure to maintain good circularity of the liner due to the significant reduction in wall thickness of the liner where the grooves exist. These positions are highly prone to distortion if normal levels of vacuum or internal pressure are applied. The resulting liner has poorly shaped grooves, an outer surface which is not circular, and a bore which has the shape of the polygon formed between the groove positions.

The present invention aims to alleviate these problems.

In accordance with the present invention, there is provided a method for the manufacture of pipes with external grooves the method comprising;
a) extruding a plain cylindrical pipe in a first plastic material (the inner core pipe);
b) co-extruding onto an outer surface of the pipe of step (a) one or more strips of an incompatible plastic material (groove infill material) being selected to be incompatible with the first plastic material such that it will not fuse with the first plastic material;
c) extruding adjacent the strips of step b), a plurality of strips of the first plastic material or a material being selected to be compatible therewith forming a groove separating layer such that it will fuse with the plain cylindrical pipe of step a) ;
d) cooling the co-extruslon; and
e) removing the strips of step b) to provide a pipe having one or more grooves on it's outer surface.

Manufacturing techniques for co-extruding strips onto pipes are well known to the skilled artisan and consequently, it is not considered necessary to detail these techniques here. In the prior art co-extrusion techniques, the strips are provided from a material chemically similar to that of the pipe differing only in pigmentation. The pigmented strips are integral with the pipe and may serve to indicate, by colour coding, fluids to be carried by the pipe. The inventors are not aware that the co-extrusion of strips of material chemically dissimilar to the main material of the pipe has previously been practiced.

The reasoning for the extrusion of the Intermediate strips in accordance with step c) is further explained below.

It would be possible to manufacture a die that produced the core pipe and the incompatible strips, without the intermediate strips of material. Indeed this is very similar to conventional co-extrusion of striped pipe, except for making the stripes from an incompatible material. However, such conventional co-extrusion would produce strips that are of uncontrolled shape, other than usually being desirably wide and shallow (something that is beneficial for striped pipe). This is because the shape of the port in the die where the co-extruded material meets the core pipe is simply a slot at the outer surface of the core pipe.

If instead, the port shape is of circular, square, rectangular, or arcuate rectangular shape, etc., the natural tendency of the strip melt as it travels through the die gap, is to become part enveloped in core pipe material, adopting a flattened hemispherical or near hemispherical shape, near-surrounded by core pipe melt. This is because the core pipe material must deform significantly to allow the introduction of the stripe material, to which there is a resistance. By separate co-extrusion of the groove separating strips, the cross-sectional profile of the melt at the point where the groove infill material is introduced already has the correct clearly defined shape to accept the groove infill material, thus distortion of the inner core layer and the groove infill material is considerably reduced or avoided.

Layered melt streams flowing through a co-extrusion die can spread non-uniformly or can become unstable leading to layer non-uniformities and even intermixing of layers under certain conditions. The causes of these instabilities are well known in the art and arise from Non-Newtonian flow properties of polymers and visco-elastic interactions.

Interfacial instability is an unsteady-state process in which the interface location between layers varies locally in a transient manner. Interface distortion due to flow instability can cause thickness non-uniformities in the individual layers while still maintaining a constant thickness product overall. These instabilities result in irregular interfaces and even layer intermixing in severe cases. If the groove separating material and the groove infill material are chosen to have similar visco-elastic properties such flow instabilities can be minimised, and envelopment by the core pipe material is resisted. There will be some distortion of the shape adopted by the incompatible strip material as It flows from the entry port, and through the die gap but by separating the flow of the inner core pipe and the groove separating layer these can be individually controlled to achieve the desired balance in overall flow.

Desirably, the incompatible strip material is selected such that, at the process temperatures and shear rate used for the extrusion process, the melt viscosity of the incompatible strip material is not significantly different from that of the first plastic material.

The number of grooves provided in accordance with the method can be varied depending upon requirements. It will be appreciated, the size and number of grooves may be limited by, for example; pipe diameter, wall thickness, groove geometry, etc. It is anticipated that for most applications the number of grooves provided will be of the order of 1 to 50, more typically 6 to 12.

The cross sectional shape of the grooves can be varied by providing differently shaped co-extrusion tools. Conveniently, the grooves are arcuate or hemispherical in cross section. The grooves are desirably configured to have a ratio of maximum width to depth of no greater than 10, more preferably no greater than 5 and most preferably 3 or less.

It will be understood, the preferred choice of core pipe material for the grooved pipe will be dictated by the intended service conditions of the end product, for example; temperature, chemical environment, mechanical loads endured in service, etc. The groove infill material is selected with respect to the core pipe material and groove separator material to give the desired melt compatibility and solid incompatibility features.

To avoid excessive bonding between the chosen core pipe, groove separation and groove infill materials on cooling of the extruded precursor, a release agent may be added to one or more of the materials.

It may be desirable (though not essential) for the core pipe material, groove separator material and the groove infill material to possess some degree of melt compatibility so that premature separation of the molten materials at the exit from the extrusion die, prior to cooling, is avoided. This melt compatibility can be achieved by employ a compatibilising agent added to one or more of the materials in order to obtain the desired level of melt compatibility.

The groove infill material can be elected to have a lower modulus of elasticity than the core pipe material to facilitate easy manipulation on removal from the liner grooves. Alternatively, where the core pipe material is relatively flexible, a more rigid groove infill material may be employed. Good thermal stability is also a preferred property of the groove infill material If it is to be repeatedly recycled.

The relative melt rheological behaviour between the source materials can be chosen to minimise any tendency to flow disturbances at the material interfaces within the die, that is, to minimise differences in the velocity profiles of the materials when they are combined within the die. In this respect, it is desirable for the groove infill material to exhibit a viscosity not dissimilar from that of the core pipe material at the prevailing processing conditions.

Some examples of suitable pairings of core pipe material and groove infill materials, are given below. It will be appreciated the list is not exhaustive and many other material combinations are possible without departing from the scope of the inventive method as claimed herein:

| CORE PIPE MATERIAL | GROOVE INFILL MATERIAL |
|---|---|
| polyethylene | polypropylene |
| polyamide | polyethylene |
| polyamide | polypropylene |
| PVDF | polyethylene |
| PVDF | polypropylene |
| polyamide/polyolefin alloy | polyolefin |
| polyester | polyolefin |
| PPS | polyolefin |

The method of the invention can readily be performed using conventional extruding apparatus adapted for the purpose. Such equipment may comprise:
a conventional extrusion line with core pipe extruder (Extruder 1), vacuum calibration, spray cooling, haul-off and marking equipment;
a first co-extruder (Extruder 2) for extruding strips of material chemically similar to that of the core pipe;
a second co-extruder (Extruder 3) for extruding strips of material chemically dissimilar to the pipe core material;
a suitably configured co-extrusion tooling set; and
equipment for removing the strips of chemically dissimilar material.

The tool set may comprise any conventional pipe extrusion tool, for example, but not strictly limited to; a spiral mandrel, a basket or flighted tool.

For example, in one embodiment, there may be provided a two-layer spiral mandrel tool, the first plastics material (core pipe material) being supplied from Extruder 1 to the innermost of the two layered spiral mandrels. A further supply of the first plastics material, or material compatible therewith, is provided from Extruder 2 to the outermost of the two layered spiral mandrels. Prior to coinciding with the core pipe material, the annulus of melt exiting from the outermost spiral mandrel is divided into a plurality of arcuate melt streams between which is provided a multi-porting arrangement of molten material, incompatible with the first material, from the Extruder 3.

The core pipe and arcuate streams of material fuse, the incompatible material sitting between the streams but being removable from the surface of the fused core pipe and streams.

Extruders 1 and 2 could be a single extruder including a separator for separating the molten material as it is extruded. For example, the extruder may include a "Y" piece or other melt divider commonly known in the art.

For the purposes of exemplification, some embodiments of the invention are now described in more detail with reference to the following figures in which;
Figure 1 shows in cross section an end product obtained in accordance with the method of the invention;
Figure 2 shows a precursor of the product of claim 1 with the strips of incompatible material still in situ in external axial grooves of the end product;
Figure 3 shows the precursor of Figure 2 with the strips of incompatible material removed;
Figure 4 shows the arrangement of the three sources of material used to produce the precursor of Figure 2 and their configuration as they emerge from the extruder;
Figure 5 shows one embodiment of apparatus which may be used to perform the method of the invention;

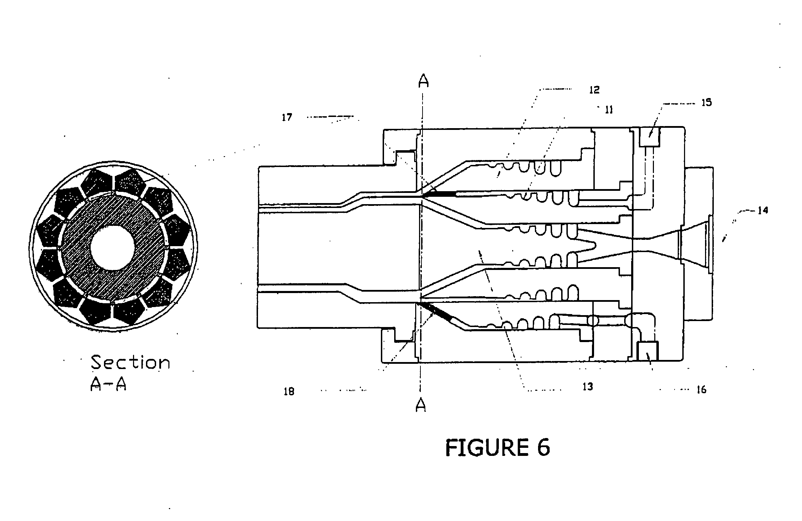

Figure 6 shows a view of the different material streams as they merge at the line A-A as marked;
Figure 7 shows a first tool configuration for producing a first axial groove profile in the outer surface of a pipe in accordance with the present invention;
Figure 8 shows a second tool configuration for producing a second axial groove profile in the outer surface of a pipe in accordance with the present invention;
Figure 9 shows a third tool configuration for producing a third axial groove profile in the outer surface of a pipe in accordance with the present invention;
Figure 10 shows a fourth tool configuration for producing a fourth axial groove profile in the outer surface of a pipe in accordance with the present invention;
Figure 11 shows the flow paths of each of the first plastic material, the incompatible strip material and the compatible strip material as they pass through the tool of Figure 5.

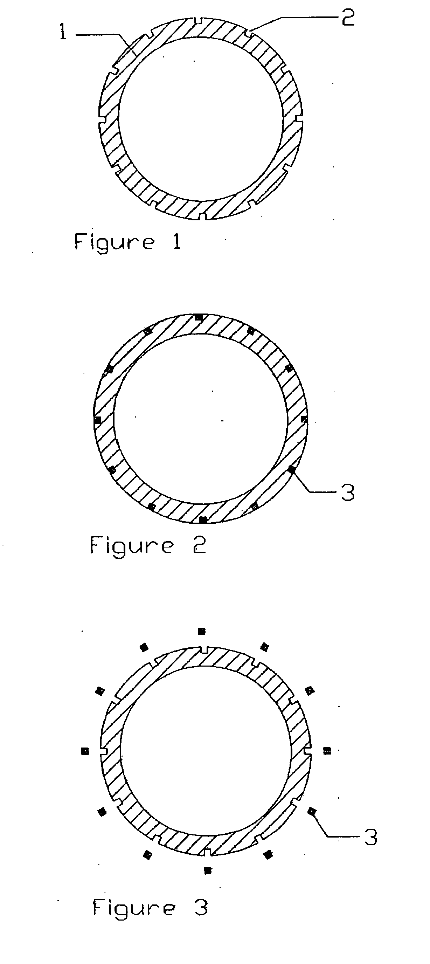

Figure 1 shows in cross section a grooved pipe produced in accordance with method of the invention. In this example, the groove cross-section is square although it will be understood that other profiles are possible. The grooved pipe comprises a main body of fused materials 1 with a plurality of equally spaced, longitudinally extending axial grooves 2.

The precursor to the grooved pipe of Figure 1 is shown in Figure 2. In Figure 2 infill strips 3 of a material Incompatible with the fused body are still embedded in the grooves 2 of the outer surface of the pipe 1. Figure 3 shows the infill strips 3 extracted to reveal the grooves 2.

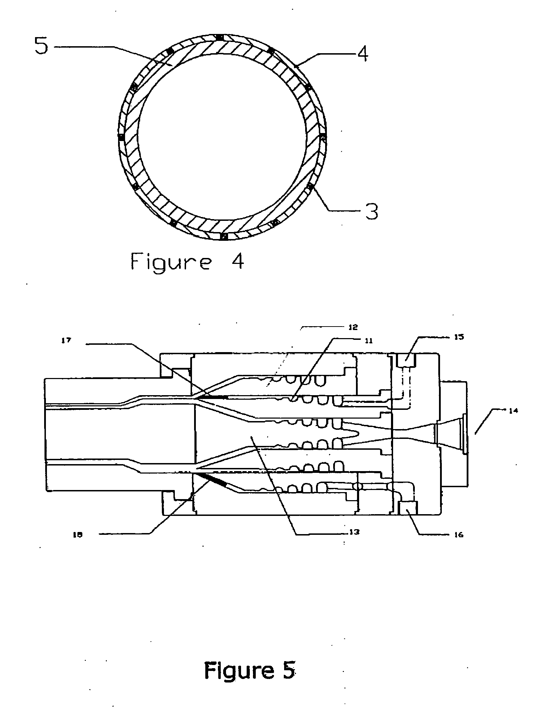

Figure 4 shows the structure of the precursor of Figure 2 prior to fusion of the core pipe with the strips of compatible material to provide the main body 1. The three separate sources of material are shown as they flow through the extrusion die. The first source of material 5 forms the core pipe, the second source of material 4 forms the strips which ultimately separate the grooves of the end product, this is interspersed by the third source material 3 which forms the grooves of the end product.

The material for the main Inner layer (core pipe) 5 and the groove-separating layer 4 are preferably the same material but may be different materials so long as there is intimate bonding between them in the finished product. For example, the main inner layer may be produced from a high specification material having optimum chemical resistance properties required for the end application of the pipe. The groove-separating layer could be constructed of the same material or of a lower performance material capable of bonding adequately to the main inner layer. For example, one might use virgin material of the highest purity for the main inner layer 5 and then a recovered, reprocessed, lower purity source of the same base material for the groove separating layer 4.

Optionally, the groove separating material can be advantageously chosen to have specific mechanical properties that are different from those of the core pipe material. For example, it is known that when grooved pipe are used as pipe liners, high internal pressures on the pipe tend to cause the volume of grooves in the outer surface to reduce as a result of material creep flow. To reduce this tendency, the groove separating material can be chosen to have a higher modulus of elasticity in compression than the core pipe material. For example, the core pipe material may be a MDPE copolymer having excellent environmental stress crack resistance, and the groove-separating material a HDPE material having greater creep resistance. Alternatively, the core pipe material could be a highly plasticised polyamide (for example PA11) and the groove separating material may be chosen to be a less plasticised grade of polyamide thereby giving the groove separations a greater stiffness and creep resistance and reducing the likelihood of the grooves being distorted in use.

The groove infill material 3 is substantiaily incompatible with the core pipe and groove separating materials such that on solidification of the extruded product, there is minimal if any bonding between the core pipe and groove infill material or the, groove separating material and groove infill material.

To aid retention of the groove infill material 3 within the grooves 2 during manufacture it is preferable for the extruded product to be externally cooled as this produces a compressive residual stress at the outer surface of the product, which helps to keep the groove infill material in place.

It will be appreciated, the cross-sectional profiles of the grooves and groove infill material can be engineered to provide a mechanical key between them to further aid retention of the groove infill material which may be necessary in cases where there is a complete lack of bonding with the groove separating material.

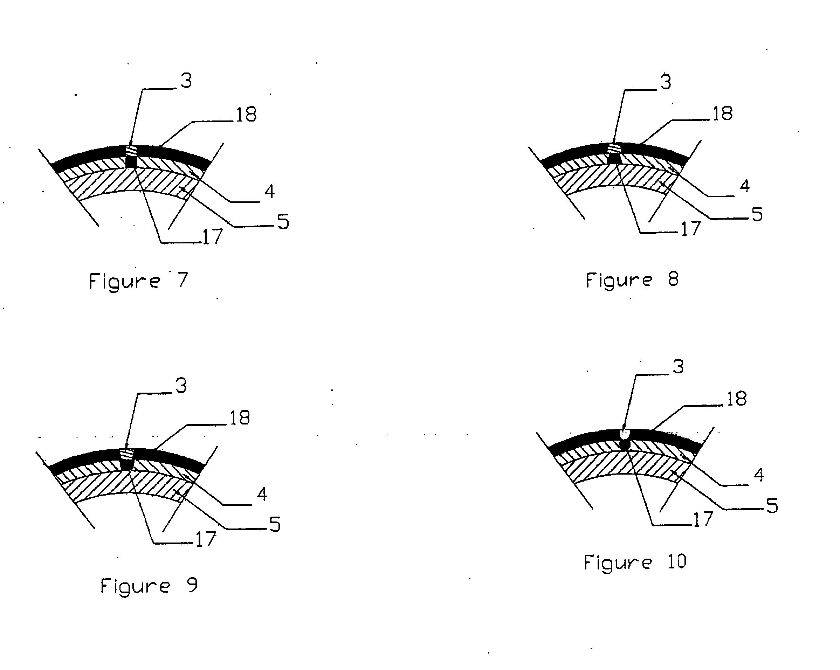

As shown in Figures 7 to 10, the shape of the flow splitting vanes 17 and 18 within the co-extrusion tool used to perform the method of the invention can influence the cross-sectional profile of the groove infill material, and the grooves in the finished product. Respectively, Figures 7 to 10 show tooling to produce; a square groove, a trapezoidal groove, an inverted trapezoidal groove and an arcuate groove.

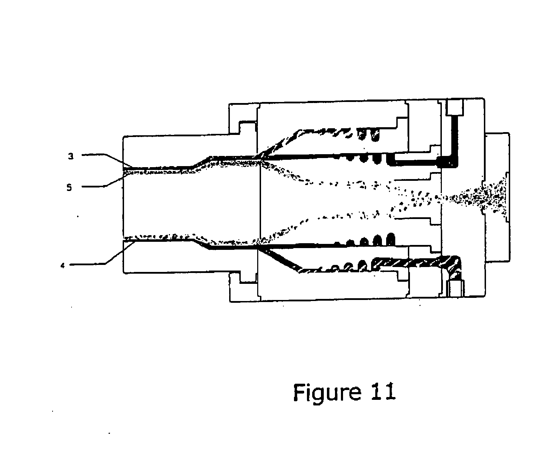

Figure 11 shows the flow patterns of the three materials, each marked differently for clarity. The core pipe (or first plastic material) 5 is shown as dotted, the groove infill material 3 as striped and the groove separating material 4 in block colour.

With some material combinations there may be a tendency for the groove-separating material to encapsulate the groove infill material before it emerges from the die. Alternatively, there may be a tendency of the groove infill material to swell and lose definition of, for example, the desired square shape at the base of the grooves. In these circumstances the vanes 17 and 18 may be constructed so that they have, for example, a trapezoidal rather than a simple rectangular cross-section.

The following describes one example of how the invention has been reduced to practice.

A liner pipe of external diameter 200mm and wall thickness 12mm was produced with 12 equally spaced external axial grooves each having a square cross-section profile of approximately 4mm x 4mm. The tooling used to extrude the precursor to the liner pipe is shown in Figure 5.

As can be seen from Figure 5, the tool consisted of three concentric spiral mandrels 11, 12, 13 which were each fed by a separate extruder. The inner spiral mandrel 13 formed the core pipe 5 of the liner pipe and was fed with a polyethylene material (Eltex TUB121 from BP Solvay). The middle spiral mandrel 11 was fed with the same polyethylene material from a separate extruder to form the groove-separations 4. The outer spiral mandrel 12 was fed with a polypropylene random copolymer material (Borealis RA130E), which formed the groove infills 3.

At the junction of the three spiral mandrels 11, 12, 13 within the tool the annular melt flow from between the two outermost spiral mandrels 11 and 12 was divided by means of vanes 17 which selectively blocked the flow at certain points around the circumference of the melt annulus, thus creating well defined grooves 2 of the desired cross sectional shape. Similarly, the melt annulus created by the outer spiral mandrel 12 was further divided by means of vane 18 to produce the strands 3 of groove infill material. The positioning of these vanes 17, 18 was set to coincide with the divisions created in the middle layer of the melt as shown in Figures 7 to 10.

At the junction of the three spiral mandrels 11, 12, 13 the material configuration was as shown in Figure 4.

By the time the extrudate had emerged from the die aperture the inner layer 5 and groove separation layer 4 had completely bonded together to give the precursor structure shown in Figure 2.

The extrudate was calibrated and cooled in a vacuum spray tank. The groove infill material 3 remained in place throughout the cooling stage of the process. At the end of the production line the groove infill material was peeled away from the grooves on the pipe surface and recovered for re-use.

## Claims

1. A method for the manufacture of pipes with external grooves the method comprising;
a) extruding a plain cylindrical pipe (5) in a first plastic material;
b) co-extruding onto an outer surface of the pipe of step (a) one or more strips of an incompatible plastic material (3) being selected to be incompatible with the first plastic material such that it will not fuse with the first plastic material;
c) extruding adjacent the strips of step b), a plurality of strips of the first plastic material or a material being selected to be compatible therewith (4) such that it will fuse with the plain cylindrical pipe of step a) ;
d) cooling the co-extrusion; and
e) removing the strips (3) of step b) to provide a pipe having one or more grooves (2) on it's outer surface.

2. A method as claimed in claim 1 wherein the incompatible strip material (3) is selected such that, at the process temperatures and shear rate used for the extrusion process, the melt viscosity of the incompatible strip material (3) is not significantly dissimilar from that of the first plastic material (5).

3. A method as claimed in claim 1 or claim 2 wherein the number of incompatible strips (3) provided and resulting number of grooves (2) is in the range 1 to 50.

4. A method as claimed in claim 3 wherein the number of incompatible strips (3) provided and resulting number of grooves (2) is in the range 6 to 12.

5. A method as claimed in any preceding claim wherein the incompatible strips (3) and resulting grooves (2) are arcuate or hemispherical in cross section.

6. A method as claimed in any preceding claim wherein the incompatible strips (3) and resulting grooves (2) are configured to have a ratio of maximum width to depth of no greater than 10.

7. A method as claimed in claim 6 wherein the ratio is no greater than 6.

8. A method as claimed in claim 6 or 7 wherein the ratio is 3 or less.

9. A method as claimed in any preceding claim wherein the first plastic material (5) and compatible strip material (4) comprise the same core material.

10. A method as claimed in claim 9 wherein the compatible strip material (4) is a less pure form of the first plastic material.

11. A method as claimed in any preceding claim, further comprising introduction of a releasing agent between the incompatible strip material (3) and the first plastic material (5) and/or the compatible strip material (4).

12. A method as claimed in any preceding claim further comprising introducing a compatibilising agent into one or more of the first material (5), the compatible strip material (4) and the incompatible strip material (3).

13. A method as claimed in any preceding claim wherein the incompatible strip material (3) is selected to have a different modulus of elasticity to that of the first plastic material (5) thereby to facilitate easy manipulation on removal to form the grooves (2).

14. A method as claimed in any preceding claim wherein the incompatible strip material (3) has good thermal stability.

15. A method as claimed in any preceding claim wherein the combination of first plastic material (5) and incompatible material (3) is selected from the following table:
| CORE PIPE MATERIAL | GROOVE INFILL MATERIAL |
|---|---|
| polyethylene | Polypropylene |
| polyamide | Polyethylene |
| polyamide | Polypropylene |
| PVDF | Polyethylene |
| PVDF | Polypropylene |
| polyamide/polyolefin alloy | Polyolefin |
| polyester | Polyolefin |
| PPS | Polyolefin |

16. An apparatus when used in the method of claim 1 for performing the method of any preceding claim comprising;
a conventional extrusion line with core pipe extruder (Extruder 1), vacuum calibration, spray cooling, haul-off and marking equipment;
a first co-extruder (Extruder 2) for extruding strips of material chemically similar to that of the core pipe;
a second co-extruder (Extruder 3) for extruding strips of material chemically dissimilar to the pipe core material;
a suitably configured co-extrusion tooling set (11, 12, 13, 17, 18); and
equipment for removing the strips of chemically dissimilar material.

17. An apparatus as claimed in claim 16 wherein the tooling set may comprises a pipe extrusion tool selected from; a spiral mandrel (11, 12, 13), a basket or a flighted tool.

18. An apparatus as claimed in claim 16 wherein the tooling set comprises 3 concentrically arranged spiral mandrel tools (11, 12, 13) each fed by a separate extruder.

19. An apparatus as claimed in claim 18 further including one or more vanes (17) between the two outermost spiral mandrels (11, 12) serving to selectively block the flow of material at certain points around the circumference of the melt annulus.

20. An apparatus as claimed in claim 19 wherein comprising one or more vanes (18) adjacent the outermost spiral mandrel (12).

21. A pipe or pipe liner manufactured by the method as claimed in any of claims 1 to 15.
